# EUROPÄISCHE PATENTSCHRIFT

(11) **EP 3 665 133 B1**
(45) Veröffentlichungstag und Bekanntmachung des Hinweises auf die Patenterteilung: **02.06.2021**
(21) Anmeldenummer: 18753137.1
(22) Anmeldetag: 07.08.2018
(51) Int. Cl.: C04B 7/52

(54) **VERFAHREN UND ANLAGE ZUR HERSTELLUNG VON ZEMENT**
METHOD AND PLANT FOR PRODUCING CEMENT
PROCÉDÉ ET INSTALLATION DE FABRICATION DE CIMENT

(30) Priorität: 08.08.2017 DE 102017117985
(43) Veröffentlichungstag der Anmeldung: 17.06.2020
(73) Patentinhaber: thyssenkrupp Industrial Solutions AG, 45143 Essen (DE); thyssenkrupp AG, 45143 Essen (DE)
(72) Erfinder: KACHE, Guido, 59269 Beckum (DE); WILCZEK, Michael, 48231 Warendorf (DE); ASSMANN, Björn-Olaf, 59063 Hamm (DE)
(74) Vertreter: thyssenkrupp Intellectual Property GmbH
(86) Internationale Anmeldenummer: PCT/EP2018/071395
(87) Internationale Veröffentlichungsnummer: WO 2019/030226

(56) Entgegenhaltungen:
- EP-A2- 0 648 539
- DE-B3-102015 013 892

## Beschreibung

Die Erfindung betrifft ein Verfahren und eine Anlage zur Herstellung von Zement.

Bei der Zementmahlung wird das Zementausgangsmaterial, welches aus Zementklinker und weiteren Zusatzstoffen, wie Silcastaub, Puzzolan, Flugasche, gebrannter Schiefer, Kalkstein und/oder Hüttensand und/oder Sulfatträgern, besteht, in wenigstens einer Kugelmühle gemahlen und anschließend in einem Sichter in Feingut und Grobgut getrennt, wobei das Grobgut nochmals der Kugelmühle aufgegeben wird, bis die gewünschte Feinheit erreicht ist.

Aus der DE 10 2007 046 834 A1 ist ein Verfahren zur Herstellung von hochwertigen Portlandzementen bekannt, bei dem eine zweistufige Mahlanlage zur Anwendung kommt. Die erste Mahlstufe besteht aus einer ersten Mühle und einem ersten dynamischen Sichter, wobei die Mühle durch eine Kugel-, Gutbettwalzen- oder Vertikalrollenmühle gebildet sein kann. Der Austrag der ersten Mühle wird dem ersten dynamischen Sichter zugeführt, dessen Grobkorn zur ersten Mühle zurückgeführt wird. Der Feingutaustrag des ersten dynamischen Sichters wird einem zweiten dynamischen Sichter zugeführt oder gelangt alternativ direkt in einen Silo, der ebenfalls mit dem Eingang des zweiten dynamischen Sichters verbunden ist. Aus einem weiteren Silo wird zudem ein feinteiliger Zumahlstoff, wie beispielsweise Hüttensandmehl oder Hüttensandgries dem Eintrag des zweiten dynamischen Sichters zugeführt. Außerdem können zusätzlich Sulfatträger zugegeben werden. Das Grobkorn des zweiten dynamischen Sichters gelangt in eine zweite Mühle, die beispielsweise durch eine Kugelmühle, eine Vertikalrollenmühle oder eine Rührwerkskugelmühle gebildet werden kann. Der Austrag der zweiten Mühle gelangt wiederum auf den zweiten dynamischen Sichter, dessen Feingut über eine Förderstrecke in einen Zementsilo eingetragen wird.

Die EP 0 648 539 A2 offenbart eine Umlaufmahlanlage mit zwei Hochdruck-Walzenpressen, die jeweils mit einem Sichter zusammenwirken. Weiterhin ist vorgehen, dass eine Teilmenge eines ersten Mahlkreislauf als erstes Fertigprodukt B abgezogen werden kann, während ein zweites Fertigprodukt A in einem zweiten Mahlkreislauf erzeugt wird.

Der Erfindung liegt nun die Aufgabe zugrunde ein Verfahren und eine Anlage zur Herstellung von Zementen anzugeben, die sich durch eine hohe Produktionsflexibilität und zusätzliche Möglichkeiten zur Beeinflussung von Zementeigenschaften auszeichnet.

Erfindungsgemäß wird diese Aufgabe durch die Merkmale der Ansprüche 1 und 8 gelöst.

Beim erfindungsgemäßen Verfahren zur Herstellung von Zementen wird Zementausgangsmaterial in wenigstens einer Kugelmühle gemahlen und anschließend in einem Sichter in Feingut und Grobgut getrennt, wobei das Grobgut nochmals der Kugelmühle aufgegeben wird. Das Feingut des Sichters wird mengenmäßig in eine erste und eine zweite Teilmenge aufgeteilt, wobei die erste Teilmenge einen ersten Zement bildet, während die zweite Teilmenge des Feingutes einer trockenbetriebenen Rührwerkskugelmühle zur weiteren Mahlung zugeführt wird.

Unter dem Zementausgangsmaterial ist insbesondere Zementklinker zu verstehen, wobei üblicherweise aber auch weitere Zumahlstoffen, wie beispielsweise Hüttensand, Silcastaub, Puzzolan, Flugasche, gebrannter Schiefer, Kalkstein, Sulfatträger oder andere, vorgesehen sind.

Durch die Verwendung einer Kugelmühle kann bereits ein den Normen entsprechender Zement mit der erforderlichen Feinheit von beispielsweise 300 bis 500 m²/kg nach Blaine hergestellt werden. Das erfindungsgemäße Verfahren bietet nun die zusätzliche Möglichkeit, eine Teilmenge des ersten Zements mengenmäßig abzutrennen und einer trockenbetriebenen Rührwerkskugelmühle zur weiteren Mahlung zuzuführen, wobei der dabei entstehende zweite Zement wahlweise mit dem ersten Zement vermischt oder als eigenständiges Produkt genutzt wird. Aufgrund der hohen Anzahl an Mahlkörpern und der durch das Rührwerk der Rührwerkskugelmühle eingebrachten hohen kinetischen Energie der Mahlkörper ist die Rührwerkskugelmühle für die Vermahlung von Partikeln in der Größenordnung von 300 bis 500 m²/kg besonders prädestiniert. Es können hierbei Feinheiten oberhalb von 500 m²/kg insbesondere im Bereich von 500 bis über 800 m²/kg nach Blaine erreicht werden.

Der Vorteil des erfindungsgemäßen Verfahrens besteht insbesondere darin, dass durch die Nachmahlung eines mengenmäßigen Teilstroms der ersten Zements ein für den Kunden maßgeschneiderter Zement hergestellt werden kann. Darüber hinaus kann diese Nachmahlung zu Zeiten durchgeführt werden, in denen in der bestehenden Energieversorgung genügend Kapazitäten vorliegen, da die Rührwerkskugelmühle nicht als fester Bestandteil einer zweistufigen Mahlanlage fungiert.

Das erfindungsgemäße Verfahren unterscheidet sich von dem zweistufigen Mahlverfahren gemäß der DE 10 2007 046 834 A1 dadurch, dass in der Rührwerkskugelmühle eine mengenmäßige Teilmenge des ersten Zements weiter aufgemahlen wird, um einen zweiten Zement herzustellen, der wahlweise durch Vermischung mit dem ersten Zement die Herstellung eines maßgeschneiderten, kundenspezifischen Zements erlaubt oder als separates Produkt verwendbar ist. Im Gegensatz hierzu wird bei der DE 10 2007 046 834 das Grobgut der ersten Mahlstufe der zweiten Mühle aufgegeben. Die Feinheit des Endproduktes kann dadurch nur durch eine Verstellung der dynamischen Sichter verändert werden. Außerdem ist der ständige Einsatz der zweiten Mühle erforderlich.

Beim erfindungsgemäßen Verfahren lässt sich die Feinheit individuell durch das Mischungsverhältnis des ersten und zweiten Zementes einstellen. Ein weiterer Vorteil besteht auch darin, dass die trockenbetriebene Rührwerkskugelmühle nicht ständig betrieben werden muss.

Gemäß einer weiteren Ausgestaltung der Erfindung ist vorgesehen, dass die zweite Teilmenge, welche der trockenbetriebenen Rührwerkskugelmühle zugeführt wird, 3 bis 20 Gew.-%, vorzugsweise 5 bis 10 Gew.-% des Feingutes des Sichters beträgt. Die trockenbetriebene Rührwerkskugelmühle kann dabei als einfache Durchlaufmühle, d. h. ohne in Verbindung stehenden Sichter, betrieben werden, wodurch sich der apparative Aufwand entsprechend reduziert. Gemäß einem anderen Ausführungsbeispiel kann aber auch vorgesehen werden, dass die trockenbetriebene Rührwerkskugelmühle mit einem eigenen Sichter betrieben wird, wobei die Grieße dieses Sichters zurück zur Rührwerkskugelmühle geleitet werden.

Die erfindungsgemäße Zementanlage besteht im Wesentlichen aus wenigstens einer Kugelmühle mit einem Einlass zur Aufgabe von Zementausgangsmaterial und einem Auslass, einem Sichter mit einem Sichtereinlass, einem Grobgutauslass und einem Feingutauslass, wobei der Auslass der Kugelmühle mit dem Sichtereinlass und der Grobgutauslass mit dem Einlass der Kugelmühle in Verbindung stehen. Weiterhin sind wenigstens ein erster Zementsilo sowie eine Förderstrecke vorgesehen, die zwischen dem Feingutauslass des Sichters und dem wenigstens einen ersten Zementsilo angeordnet ist. Schließlich ist eine trockenbetriebene Rührwerkskugelmühle vorgesehen, die über einen in der Förderstrecke angeordneten Materialteiler oder Splitter mit dem Feingutauslass des Sichters in Verbindung steht.

Unter einem Materialteiler bzw. Splitter ist eine Einrichtung zu verstehen, die einen Materialstrom mengenmäßig aufteilt. Im Gegensatz hierzu wird bei einem Sichter das Material nach der Partikelgröße getrennt.

Die trocken betriebene Rührwerkskugelmühle weist einen Einlass und einen Auslass, wobei der Einlass mit dem Materialteiler und gemäß einer weiteren Ausgestaltung der Erfindung mit wenigstens einem Vorratsbehälter für weitere Zumahlstoffe in Verbindung steht. Bei den weiteren Zumahlstoffen kann es sich beispielsweise um Hüttensand, Silcastaub, Puzzolan, Flugasche, gebrannten Schiefer, Kalkstein, Sulfatträger oder dergleichen handeln. Der Zumahlstoff wird der Rührwerkskugelmühle zweckmäßigerweise in einer Feinheit von 200 - 500 m²/kg nach Blaine zugeführt.

Weitere Ausgestaltungen der Erfindung werden anhand der nachfolgenden Beschreibung und der Zeichnung näher erläutert.

In der Zeichnung zeigen
- Fig.1: eine erfindungsgemäße Zementanlage mit einer trockenbetriebenen Rührwerkskugelmühle, die als Durchlaufmühle betriebenen wird,
- Fig. 2: eine schematische Schnittdarstellung einer trockenbetriebenen Rührwerkskugelmühle und
- Fig. 3: eine erfindungsgemäße Zementanlage mit einer trockenbetriebenen Rührwerkskugelmühle, die mit einem eigenen Sichter betrieben wird.

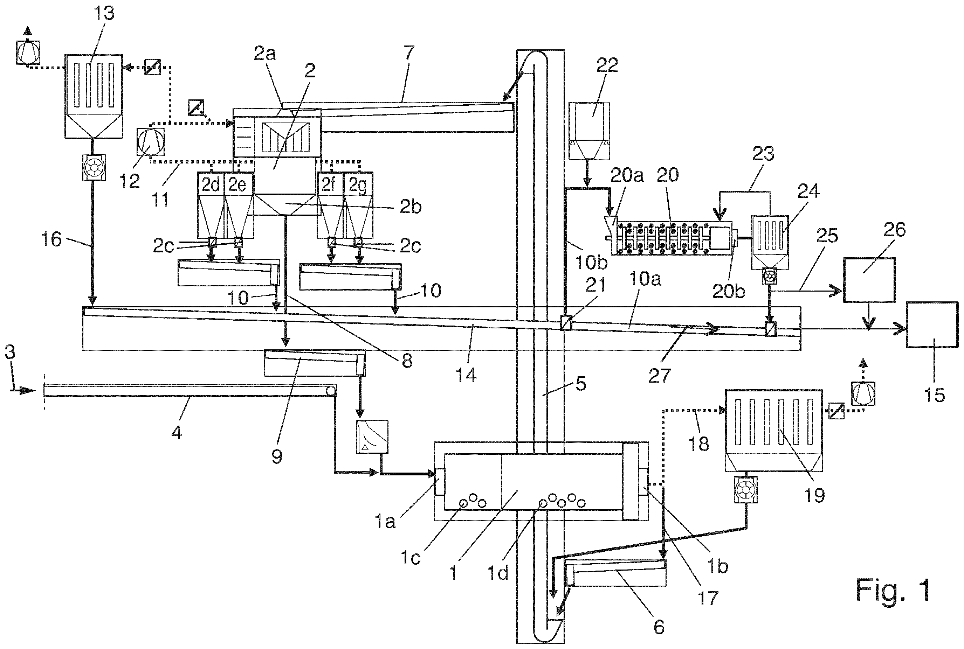

Fig. 1 zeigt ein erstes erfindungsgemäßes Ausführungsbeispiel einer Anlage zur Herstellung von Zementen, insbesondere eine Zementmahlanlage mit einer Kugelmühle 1 und einem Sichter 2. Die Kugelmühle 1 weist einen Einlass 1a zur Aufgabe von Zementausgangsmaterial 3 und einen Auslass 1b auf. Das Zementausgangsmaterial 3 wird über eine erste Förderstrecke 4 dem Einlass 1a der Kugelmühle 1 zugeführt.

Der Sichter 2 ist hier als dynamischer Sichter ausgebildet und sieht einen Sichtereinlass 2a, einen Grobgutauslass 2b und einen Feingutauslass 2c vor, wobei der Auslass 1b der Kugelmühle 1 über eine Fördereinrichtung 5, insbesondere über ein Becherwerk mit dem Sichtereinlass 2a verbunden ist. Zum Transport des Gutes vom Auslass 1b der Kugelmühle 1 zur Fördereinrichtung 5 ist hier eine zweite Förderstrecke 6 und zum Transport zwischen der Fördereinrichtung 5 und dem Sichtereinlass 2a eine dritte Förderstrecke 7 vorgesehen. Der Transport des Grobgutes 8 des Sichters 2 zum Einlass 1a der Kugelmühle 1 erfolgt über eine geeignete Verbindung, wie beispielsweise Schurren, Leitungen bzw. eine vierte Förderstrecke 9. Der Sichter 2 wird mit Sichtluft 11 betrieben, die dem Sichter 2 mit Hilfe eines Ventilators 12 zugeführt wird. Das Feingut 10 wird in Abscheidezyklonen 2d bis 2g von der Sichtluft 11 getrennt, die anschließend wieder dem Sichter 2 zugeführt wird. Ein Teil der rückgeführten Sichtluft 11 wird mit Frischluft ergänzt, während ein anderer Teil über einen Staubfilter 13 abgeleitet wird. Das in den Abscheidezyklonen 2d bis 2g des Sichters 2 abgeschiedene Feingut 10 wird über eine fünfte Förderstrecke 14 in wenigstens einen ersten Zementsilo 15 transportiert. Auch der im Staubfilter 13 abgeschiedene Staub 16 gelangt über die fünfte Förderstrecke 14 in den ersten Zementsilo 15.

Die Kugelmühle 1 weist eine für die gewünschte Zerkleinerung geeignete Kugelgattierung 1c, 1d auf und kann wie dargestellt, auch in mehr als eine Mahlkammer unterteilt sein, die jeweils eine unterschiedliche Kugelgattierung 1c, 1d aufweisen. Die Kugelmühle kann auch als Luftstrommühle ausgebildet sein, wobei der Materialaustrag pneumatisch mittels Luftstrom erfolgt. Dabei ist es denkbar, dass das ausgetragene Material zusammen mit dem Luftstrom in den dynamischen Sichter 2 eingetragen wird. Hier findet jedoch im Bereich des Auslasses 1b der Kugelmühle 1 eine mechanische Trennung des gemahlenen Materials 17 von der Kugelgattierung 1d statt, wobei die Kugelmühle durch den Luftstrom 18 entlüftet und entstaubt wird. Der Luftstrom 18 wird einem zweiten Staubfilter 19 zugeführt, wobei der abgeschiedene Staub zusammen mit dem gemahlenen Material 17 über die Fördereinrichtung 5 dem Sichter 2 zugeführt wird. Der abgeschiedene Luftstrom 18 wird in die Atmosphäre entlassen.

Die Anlage gemäß Fig. 1 sieht weiterhin eine trockenbetriebene Rührwerkskugelmühle 20 mit einem Einlass 20a und einem Auslass 20b vor. Des Weiteren ist in der Förderstrecke 14 ein Materialteiler 21 vorgesehen, der mit dem Einlass 20a der Rührwerkskugelmühle 20 in Verbindung steht. Der Materialteiler 21 ist derart ansteuerbar, dass er das über die fünfte Förderstrecke 14 zugeführte Feingut 10 in eine erste Teilmenge 10a und eine zweite Teilmenge 10b aufteilt, wobei die erste Teilmenge 10a als ein erster Zement 27 weiter in Richtung des ersten Zementsilos 15 gefördert wird, während die zweite Teilmenge 10b zur Rührwerkskugelmühle 20 gelangt. Die zweite Teilmenge 10b beträgt vorzugsweise 3 bis 20 Gew.-%, vorzugsweise 5 bis 10 Gew.-% des Feingutes 10. Dabei ist es denkbar, dass über wenigstens einen Vorratsbehälter 22 weitere feine Zumahlstoffe (200-500 m²/kg nach Blaine) der Rührwerkskugelmühle 20 aufgegeben werden.

Die in der Rührwerkskugelmühle 20 weiter zerkleinerte zweite Teilmenge 10b wird mit Hilfe einer Förderluft 23 über den Auslass 20b ausgetragen und in einem nachfolgend angeordneten Abscheider 24 von der Förderluft 23 getrennt, die anschließend wieder zur Rührwerkskugelmühle 20 zurückgeführt wird. Die in der Rührwerkskugelmühle 20 weiter zerkleinerte und im Abscheider 24 abgeschiedene zweite Teilmenge 10b kann wahlweise als ein zweiter Zement 25 in wenigstens einen zweiten Zementsilo 26 gefördert werden oder alternativ mit dem durch die erste Teilmenge 10a gebildeten ersten Zement 27 vermischt und im wenigstens ersten Zementsilo gelagert werden. Das Mischverhältnis von erstem und zweitem Zement 27, 25 erfolgt über geeignete Misch- und Dosiereinrichtungen entsprechend den für das Endprodukt gewünschten Eigenschaften.

Es ist natürlich auch denkbar, dass das Mischen der beiden Zemente durch gemeinsamen Abzug aus den beiden Silos 15, 26 oder durch Abzug aus dem zweiten Zementsilo 26 erfolgt, bevor der erste Zement 27 in den ersten Zementsilo 15 gelangt. Mit der Kugelmühle 1 lässt sich der erste Zement 27 beispielsweise mit einer Feinheit zwischen 300 und 500 m²/kg nach Blaine herstellen. In der Rührwerkskugelmühle 20 kann die Feinheit des zweiten Zement 25 insbesondere auf 500 bis >800 m²/kg nach Blaine erhöht werden. Durch das Vorsehen des zweiten Zementsilos 26 kann der zweite Zement 25 auch bevorratet werden, sodass die Rührwerkskugelmühle nicht ständig laufen muss. Es ist vielmehr möglich den Betrieb der Rührwerkskugelmühle 20 dann vorzusehen, wenn die bestehende Energieversorgung genügend Kapazitäten hat.

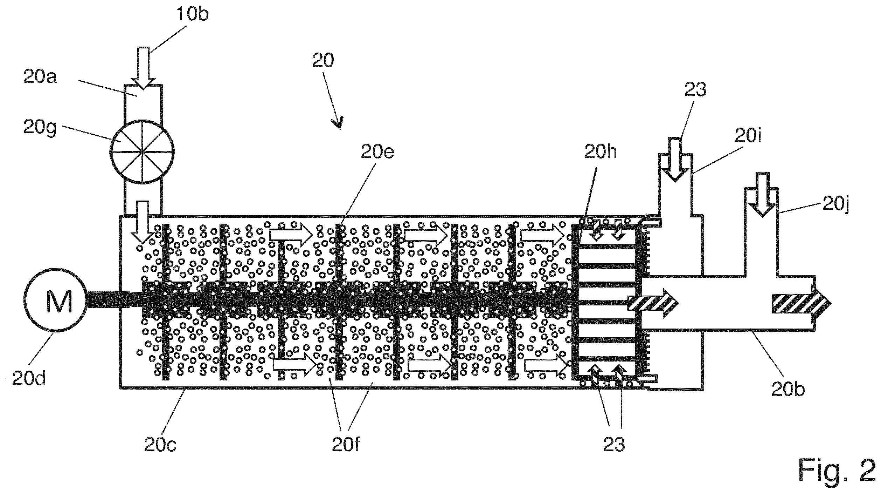

Fig. 2 zeigt eine vergrößerte Darstellung der Rührwerkskugelmühle 20. Im Gegensatz zur Kugelmühle 1 weist die Rührwerkskugelmühle 20 ein feststehendes Gehäuse 20c und ein im Inneren des Gehäuses über einen Motor 20d angetriebenes Rührwerk 20e auf. Des Weiteren wird die Rührwerkskugelmühle 20 mit Mahlkörpern 20f, insbesondere Mahlkugeln, betrieben. Die zu zerkleinernde zweite Teilmenge 10b des Feingutes 10 wird im Bereich des Einlasses 20a über eine Zellenradschleuse 20g zugeführt. Die weitere Aufmahlung erfolgt im Wesentlichen durch den Kontakt mit dem Mahlkörpern 20f, die durch das Rührwerk 20e bewegt und beschleunigt werden. Im Bereich des Auslasses 20b ist ein mit dem Rührwerk 20e mitrotierender Austragsrotor 20h vorgesehen, der die weiter aufgemahlene zweite Teilmenge 10b von den Mahlkörpern 20f trennt. Über eine im Bereich des Auslasses 20b vorgesehene Förderluftöffnung 20i wird die Förderluft 23 zum Austragen des Materials zugeführt, durchströmt den Austragsrotor 20h und trägt das aufgemahlene Material über den Auslass 20b aus. Zur Unterstützung der Förderwirkung kann im Bereich des Auslasses 20b auch noch eine weitere Förderluftöffnung 20j vorgesehen werden. Die Rührwerkskugelmühle 20 ist im vorliegenden Fall als trockenbetriebene Rührwerkskugelmühle ausgebildet, wodurch eine nachfolgende Trocknung des gemahlenen Materials entbehrlich ist.

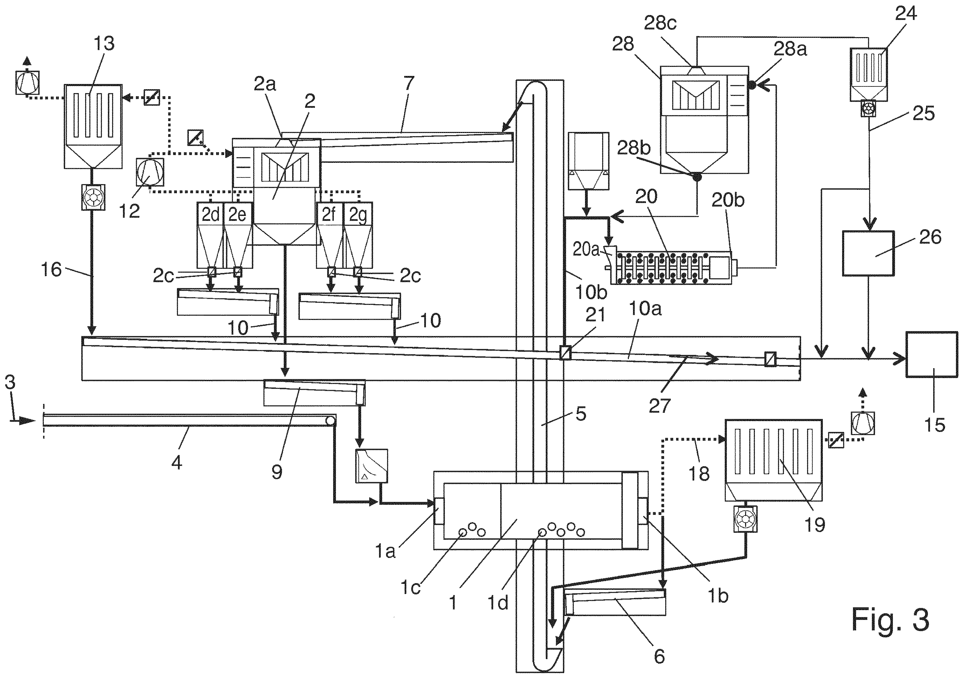

Im Ausführungsbeispiel gemäß der Fig. 1 ist die Rührwerkskugelmühle 20 als Durchlaufmühle ausgebildet. Im Rahmen der Erfindung kann aber auch vorgesehen werden, dass die Rührwerkskugelmühle 20 mit einem eigenen Sichter 28 zusammenwirkt, wie das in Fig. 3 dargestellt ist. Dieser weitere (eigene) Sichter 28 weist einen Einlass 28a, der mit dem Auslass 20b der Rührwerkskugelmühle 20 in Verbindung steht, einen Grobgutauslass 28b der zur Rezirkulation von Grobgut mit dem Einlass 20a der trockenbetriebene Kugelmühle 20 in Verbindung und einen Feingutauslass 28c auf, der wiederum in der schon gemäß Fig. 1 aufgezeigten Art entweder auf einen zweiten Zementsilo 26 oder zur Vermischung mit dem ersten Zement 27 geschaltet werden kann. Mit Hilfe des mit der Rührwerkskugelmühle 20 zusammenwirkenden weiteren Sichters 28 lässt sich die Feinheit des zweiten Zements 25 sehr exakt auf eine gewünschte Feinheit einstellen.

## Patentansprüche

1. Verfahren zur Herstellung von Zementen, wobei Zementausgangsmaterial (3) in wenigstens einer Kugelmühle (1) gemahlen und anschließend in einem Sichter (2) in Feingut (10) und Grobgut (8) getrennt wird, wobei das Grobgut (8) nochmals der Kugelmühle (1) aufgegeben wird,
**dadurch gekennzeichnet, dass** das Feingut (10) mengenmäßig in eine erste und eine zweite Teilmenge (10a, 10b) aufgeteilt wird, wobei die erste Teilmenge (10a) einen ersten Zement (27) bildet, während die zweite Teilmenge (10b) des Feingutes (10) einer trocken betriebenen Rührwerkskugelmühle (20) zur weiteren Mahlung zugeführt wird und ein dabei entstehender zweiter Zement (25) wahlweise mit dem ersten Zement (27) vermischt oder als eigenständiges Produkt genutzt wird.

2. Verfahren nach Anspruch 1, **dadurch gekennzeichnet, dass** der Sichter (2) so betrieben wird, dass das Feingut (10) des Sichters (2) eine Feinheit zwischen 300 und 500 m²/kg nach Blaine aufweist.

3. Verfahren nach Anspruch 1, **dadurch gekennzeichnet, dass** der zweite Zement (25) auf eine Feinheit größer als 500 m²/kg nach Blaine in der trocken betriebenen Rührwerkskugelmühle (20) gemahlen wird.

4. Verfahren nach Anspruch 1, **dadurch gekennzeichnet, dass** als zweite Teilmenge (10b) 3 bis 20% des Feingutes (10) abgezweigt werden.

5. Verfahren nach Anspruch 1, **dadurch gekennzeichnet, dass** die trocken betriebene Rührwerkskugelmühle (20) als Durchlaufmühle betrieben wird.

6. Verfahren nach Anspruch 1, **dadurch gekennzeichnet, dass** die trocken betriebene Rührwerkskugelmühle (20) mit einem eigenen Sichter (28) betrieben wird und die Grieße dieses Sichters (28) zurück zur Rührwerkskugelmühle (20) geleitet werden.

7. Verfahren nach Anspruch 1, **dadurch gekennzeichnet, dass** der trocken betriebenen Rührwerkskugelmühle (20) neben der zweiten Teilmenge (10b) des Feingutes (10) weitere Zumahlstoffe zugegeben werden.

8. Zementmahlanlage mit
- wenigstens einer Kugelmühle (1) mit einem Einlass (1a) zur Aufgabe von Zementausgangsmaterial (3) und einem Auslass (1b),
- einem Sichter (2) mit einem Sichtereinlass (2a), einem Grobgutauslass (2b) und einem Feingutauslass (2c), wobei der Auslass (1b) der Kugelmühle (1) mit dem Sichtereinlass (2a) und der Grobgutauslass (2b) mit dem Einlass (1a) der Kugelmühle (1) in Verbindung stehen,
- wenigstens einen ersten Zementsilo (15) sowie
- eine Förderstrecke (14), die zwischen dem Feingutauslass (2c) des Sichters (2) und dem wenigstens einen ersten Zementsilo (15) vorhanden ist,
**dadurch gekennzeichnet, dass** eine trocken betriebene Rührwerkskugelmühle (20) vorhanden ist, die über einen in der Förderstrecke (14) angeordneten Materialteiler (21) mit dem Feingutauslass (2c) des Sichters (2) in Verbindung steht.

9. Zementanlage nach Anspruch 8, **dadurch gekennzeichnet, dass** die trocken betriebene Rührwerkskugelmühle (20) einen Auslass (20b) aufweist, der mit der Förderstrecke (14) und/oder mit wenigstens einem zweiten Zementsilo (26) in Verbindung steht.

10. Zementanlage nach Anspruch 8, **dadurch gekennzeichnet, dass** die trocken betriebene Rührwerkskugelmühle (20) als Durchlaufmühle vorhanden ist.

11. Zementanlage nach Anspruch 8, **dadurch gekennzeichnet, dass** die trocken betriebene Rührwerkskugelmühle (20) einen Einlass (20a) und einen Auslass (20b) aufweist, wobei der Auslass (20b) mit einem weiteren Sichter (28) in Verbindung steht, der einen Grobgutauslass (28b) und einen Feingutauslass (28c) aufweist, wobei der Grobguteinlass (28b) zur Rezirkulation von Grobgut mit dem Einlass (20a) der trocken betriebenen Rührwerkskugelmühle (20) in Verbindung steht und der Feingutauslass mit (28c) der Förderstrecke (14) und/oder mit wenigstens einem zweiten Zementsilo (26) in Verbindung steht.

12. Zementanlage nach Anspruch 8, **dadurch gekennzeichnet, dass** die trocken betriebene Rührwerkskugelmühle (20) einen Einlass (20a) und einen Auslass (20b) aufweist, wobei der Einlass (20a) mit dem Materialteiler (21) und mit wenigstens einem Vorratsbehälter (22) für weitere Zumahlstoffe in Verbindung steht.

## Claims

1. A method for producing cements, wherein cement starting material (3) is ground in at least one ball mill (1) and is subsequently separated into fine material (10) and coarse material (8) in a classifier (2), wherein the coarse material (8) is fed to the ball mill (1) again,
**characterized in that** the fine material (10) is divided quantitatively into a first partial amount and a second partial amount (10a, 10b), wherein the first partial amount (10a) forms a first cement (27), while the second partial amount (10b) of the fine material (10) is fed to a dry-operated stirred ball mill (20) for further grinding and a resulting second cement (25) is selectively mixed with the first cement (27) or used as a separate product.

2. The method as claimed in claim 1, **characterized in that** the classifier (2) is operated in such a way that the fine material (10) from the classifier (2) has a Blaine fineness of between 300 and 500 m²/kg.

3. The method as claimed in claim 1, **characterized in that** the second cement (25) is ground to a Blaine fineness greater than 500 m²/kg in the dry-operated stirred ball mill (20).

4. The method as claimed in claim 1, **characterized in that** 3 to 20% of the fine material (10) is diverted as the second partial amount (10b).

5. The method as claimed in claim 1, **characterized in that** the dry-operated stirred ball mill (20) is operated as a continuous mill.

6. The method as claimed in claim 1, **characterized in that** the dry-operated stirred ball mill (20) is operated with a dedicated classifier (28), and the grit from this classifier (28) is passed back to the stirred ball mill (20).

7. The method as claimed in claim 1, **characterized in that** further grinding additives are added to the dry-operated stirred ball mill (20) in addition to the second partial amount (10b) of the fine material (10).

8. A cement grinding plant having
- at least one ball mill (1) with an inlet (1a) for feeding in cement starting material (3) and with an outlet (1b),
- a classifier (2) with a classifier inlet (2a), a coarse material outlet (2b) and a fine material outlet (2c), wherein the outlet (1b) of the ball mill (1) is connected to the classifier inlet (2a), and the coarse material outlet (2b) is connected to the inlet (1a) of the ball mill (1),
- at least one first cement silo (15), and
- a conveying section (14), which is provided between the fine material outlet (2c) of the classifier (2) and the at least one first cement silo (15),
**characterized in that** a dry-operated stirred ball mill (20) is provided, which is connected via a material divider (21) arranged in the conveying section (14) to the fine material outlet (2c) of the classifier (2).

9. The cement plant as claimed in claim 8, **characterized in that** the dry-operated stirred ball mill (20) has an outlet (20b), which is connected to the conveying section (14) and/or to at least one second cement silo (26).

10. The cement plant as claimed in claim 8, **characterized in that** the dry-operated stirred ball mill (20) is provided as a continuous mill.

11. The cement plant as claimed in claim 8, **characterized in that** the dry-operated stirred ball mill (20) has an inlet (20a) and an outlet (20b), wherein the outlet (20b) is connected to a further classifier (28), which has a coarse material outlet (28b) and a fine material outlet (28c), wherein the coarse material inlet (28b) is connected for recirculation of coarse material to the inlet (20a) of the dry-operated stirred ball mill (20), and the fine material outlet (28c) is connected to the conveying section (14) and/or to at least one second cement silo (26).

12. The cement plant as claimed in claim 8, **characterized in that** the dry-operated stirred ball mill (20) has an inlet (20a) and an outlet (20b), wherein the inlet (20a) is connected to the material divider (21) and to at least one storage tank (22) for further grinding additives.

## Revendications

1. Procédé de production de ciments, la matière première de ciment (3) étant broyée dans au moins un broyeur à boulets (1) puis séparée en matière fine (10) et en matière grossière (8) dans un séparateur (2), la matière grossière (8) étant à nouveau acheminée vers le broyeur à boulets (1),
**caractérisé en ce que** la matière fine (10) est divisée en termes de quantité en une première et une deuxième quantité partielle (10a, 10b), la première quantité partielle (10a) formant un premier ciment (27), tandis que la deuxième quantité partielle (10b) de la matière fine (10) est acheminée vers un broyeur à boulets agitateur à sec (20) en vue d'un broyage supplémentaire et un deuxième ciment (25) ainsi produit étant éventuellement mélangé au premier ciment (27) ou utilisé comme produit indépendant.

2. Procédé selon la revendication 1, **caractérisé en ce que** le séparateur (2) fonctionne de manière à ce que la matière fine (10) du séparateur (2) présente une finesse comprise entre 300 et 500 m²/kg selon Blaine.

3. Procédé selon la revendication 1, **caractérisé en ce que** le deuxième ciment (25) est broyé à une finesse supérieure à 500 m²/kg selon Blaine dans le broyeur à boulets agitateur à sec (20).

4. Procédé selon la revendication 1, **caractérisé en ce que** 3 à 20 % de la matière fine (10) sont séparés en tant que deuxième quantité partielle (10b).

5. Procédé selon la revendication 1, **caractérisé en ce que** le broyeur à boulets agitateur à sec (20) fonctionne comme un broyeur continu.

6. Procédé selon la revendication 1, **caractérisé en ce que** le broyeur à boulets agitateur à sec (20) fonctionne avec son propre séparateur (28) et les graviers de ce séparateur (28) sont renvoyés au broyeur à boulets agitateur (20).

7. Procédé selon la revendication 1, **caractérisé en ce que** d'autres additifs sont ajoutés en plus de la deuxième quantité partielle (10b) de la matière fine (10) au broyeur à boulets agitateur à sec (20).

8. Installation de broyage de ciment comprenant
- au moins un broyeur à boulets (1) pourvu d'une entrée (1a) destinée à l'alimentation en matière première de ciment (3) et une sortie (1b),
- un séparateur (2) pourvu d'une entrée de séparateur (2a), une sortie de matière grossière (2b) et une sortie de matière fine (2c), la sortie (1b) du broyeur à boulets (1) communiquant avec l'entrée de séparateur (2a) et la sortie de matière grossière (2b) communiquant avec l'entrée (1a) du broyeur à boulets (1),
- au moins un premier silo à ciment (15) et
- une voie de transport (14) qui est présente entre la sortie de matière fine (2c) du séparateur (2) et l'au moins un premier silo à ciment (15), **caractérisée en ce qu'**un broyeur à boulets agitateur à sec (20) est présent qui est relié à la sortie de matière fine (2c) du séparateur (2) par le biais d'un diviseur de matière (21) disposé dans la voie de transport (14).

9. Installation de production de ciment selon la revendication 8, **caractérisée en ce que** le broyeur à boulets agitateur à sec (20) comporte une sortie (20b) qui communique avec la voie de transport (14) et/ou avec au moins un deuxième silo à ciment (26).

10. Installation de production de ciment selon la revendication 8, **caractérisée en ce que** le broyeur à boulets agitateur à sec (20) se présente sous la forme d'un broyeur continu.

11. Installation de production de ciment selon la revendication 8, **caractérisée en ce que** le broyeur à boulets agitateur à sec (20) comporte une entrée (20a) et une sortie (20b), la sortie (20b) communiquant avec un autre séparateur (28) qui comporte une sortie de matière grossière (28b) et une sortie de matière fine (28c), l'entrée de matière grossière (28b) destinée à la recirculation de matière grossière communiquant avec l'entrée (20a) du broyeur à boulets agitateur à sec (20) et la sortie de matière fine communiquant avec la sortie de matière fine (28c) de la voie de transport (14) et/ou avec au moins un deuxième silo à ciment (26) .

12. Installation de production de ciment selon la revendication 8, **caractérisée en ce que** le broyeur à boulets agitateur à sec (20) comporte une entrée (20a) et une sortie (20b), l'entrée (20a) communiquant avec le diviseur de matière (21) et avec au moins un récipient de stockage (22) destiné à d'autres additifs.
